(19)

**Europäisches Patentamt**
**European Patent Office**
**Office européen des brevets**

(11) **EP 3 524 997 A2**

(12) **EUROPÄISCHE PATENTANMELDUNG**

(43) Veröffentlichungstag:
14.08.2019 Patentblatt 2019/33

(51) Int Cl.:
***G01S 3/48*** *(2006.01)*

(21) Anmeldenummer: **19155937.6**

(22) Anmeldetag: **07.02.2019**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **07.02.2018 DE 102018201876**

(71) Anmelder: **Deutsches Zentrum für Luft- und Raumfahrt e.V.**
**51147 Köln (DE)**

(72) Erfinder:
- ZHANG, Siwei
  80686 München (DE)
- JOST, Thomas
  82205 Gilching (DE)
- DAMMANN, Armin
  86899 Landsberg (DE)
- PÖHLMANN, Robert
  80802 München (DE)

(74) Vertreter: **dompatent von Kreisler Selting Werner - Partnerschaft von Patent- und Rechtsanwälten mbB**
**Deichmannhaus am Dom**
**Bahnhofsvorplatz 1**
**50667 Köln (DE)**

(54) **VERFAHREN ZUR BESTIMMUNG DER POSITION EINES SENDERS**

(57) Die Erfindung betrifft ein Verfahren zur Bestimmung der Position eines Senders (10) mit den Schritten: Aussenden eines Funksignals durch den Sender; Empfangen des Funksignals durch einen Empfänger mittels eines Antennen-Arrays (12) mit einer Vielzahl L von Antennen (14) l = 1,..,L; Ermitteln der Phasen $\varphi_l$ des Funksignals an den einzelnen Antennen l des Antennen-Arrays; Bestimmung der Krümmung der Wellenfront des empfangenen Funksignals aus den Phasen $\varphi_l$ und Bestimmen der Position des Senders anhand der ermittelten Krümmung.

Fig. 1

**Beschreibung**

Die vorliegende Erfindung betrifft ein Verfahren zur Bestimmung der Position eines Senders sowie einen Empfänger zum Empfangen eines Funksignals ausgebildet zur Bestimmung der Position des Senders. Weiterhin betrifft die Erfindung ein Kommunikationssystem mit einem solchen Empfänger.

Bei heutigen Telekommunikationstechniken ist die Information über die Position von großer Bedeutung. Die Positionsinformationen können entweder an einen Benutzer weitergegeben werden oder die Informationen über die Positionen können verwendet werden zur Anpassung der Übertragung zwischen Sender und Empfänger, wodurch eine Optimierung der Kanalkapazität erfolgt. Dies ist insbesondere bei den Telekommunikationsstandards der vierten Generation (4G) und der fünften Generation (5G) beabsichtigt.

Beim bisherigen Verfahren zur Positionsbestimmung eines Terminals wie beispielsweise einem Handy, Smartphone, Laptop oder dergleichen, ist es bisher erforderlich, dass sich dieses Terminal im Bereich mehrerer Basisstationen befindet. Basisstationen sind jedoch in erster Linie nur zur Datenübertragung ausgebildet, so dass die Abdeckung der einzelnen Basisstationen nicht überlappend ist. Somit besteht häufig nicht die Möglichkeit Signale gleichzeitig von mehr als einer Basisstation zu empfangen.

Bekannte Verfahren zur Positionsbestimmung verwenden die empfangene Signalstärke (received signal strength - RSS), welche jedoch sensibel auf sich verändernde Umgebungen reagiert.

Weiterhin ist es möglich die Position mittels der Signallaufzeit oder einem Signallaufzeitunterschied zu ermitteln. Dies erfordert jedoch die zeitliche Synchronisation einer Vielzahl räumlich voneinander getrennter Komponenten, also zumindest mehrerer Sender bzw. mehrerer Empfänger.

Aufgaben der vorliegenden Erfindung ist es ein Verfahren zur Bestimmung der Position eines Senders zu schaffen, welches einfach durchzuführen ist.

Die Aufgabe wird gelöst durch das Verfahren des Anspruchs 1 sowie durch den Empfänger des Anspruchs 10 und das Kommunikationssystem des Anspruchs 15.

Bei dem erfindungsgemäßen Verfahren zur Bestimmung der Position $p_s$ eines Senders wird zunächst ein Funksignal durch einen Sender ausgesendet. Bei dem Sender handelt es sich insbesondere um ein Terminal wie beispielsweise ein Handy, Smartphone, Laptop, Tablet oder dergleichen. Das Funksignal wird durch einen Empfänger empfangen mittels eines Antennen-Arrays. Das Antennen-Array weist dabei eine Vielzahl von Antennen I = 1,..,L auf. Antennen-Arrays werden beispielsweise bei der fünften Generation des Drahtlostelekommunikationsnetzwerks (5G) vorgesehen und dienen hierbei der vorgesehenen Funktion der Mehrfacheingangs- und Mehrfachausgangskommunikation (multiple input and multiple output - MIMO). Dabei wird an den einzelnen Antennen I des Antennen-Arrays insbesondere zu einem bestimmten gemeinsamen Zeitpunkt die Phasen $\varphi_l$ des Funksignals ermittelt. Aus den Phasen $\varphi_l$ wird die Krümmung $\kappa$ der Wellenfront des empfangenen Funksignals bestimmt. Insbesondere bei geringen Abständen von wenigen Metern bis zu Abständen von 100 Metern oder mehr ist aufgrund der Abmessung D des Antennen-Arrays und den in der Datenkommunikation üblichen Wellenlänge von einigen Millimetern, befindet sich der Empfänger in einer Entfernung vom Sender, so dass am Antennen-Array des Empfängers eine Kugelwelle empfangen wird bzw. eine Krümmung der Wellenfront erfassbar ist. Die Krümmung $\kappa$ der Wellenfront ist aus den Phasen $\varphi_l$ bestimmbar. Aus der ermittelten Krümmung $\kappa$ wird die Position $p_s$ des Senders bestimmt. Somit wird die Abmessung D des Antennen-Arrays ausgenutzt, um die Krümmung $\kappa$ der Wellenfront des empfangenen Funksignals zu ermitteln und hieraus die Position $p_s$ zu bestimmen. Eine zeitliche Synchronisation zwischen Sender und Empfänger ist nicht mehr erforderlich. Auch ist es nicht erforderlich, dass mehrere zeitsynchrone Empfänger gleichzeitig das Funksignal empfangen können. Selbstverständlich ist die vorliegende Erfindung nicht auf eine bestimmte Wellenlänge beschränkt, sondern für alle Wellenlängen anwendbar, solange sich der Empfänger im Nahfeld des Senders befindet. Somit ist ein Verfahren geschaffen, welches ohne Kenntnis über das transmittierte Signal eine Positionierung erlaubt. Insbesondere ist kein Pilotton erforderlich oder ein Austausch von Daten.

Das erfindungsgemäße Verfahren kann beispielsweise verwendet werden, um eine Fahrzeug-zu-Fahrzeug-Positionierung zu ermitteln ebenso wie relative Position Fahrzeug-zu-Fußgänger. Auch ist es im Rahmen der vorliegenden Erfindung möglich Straße- und/oder Straßenseiten zu ermitteln durch Kenntnis der Position des Senders. Auch ist es möglich das Verfahren einzusetzen bei der Positionsbestimmung unbemannter Fahrzeuge und Flugzeuge, wie beispielsweise Drohnen oder dergleichen.

Vorzugsweise wird die Krümmung bestimmt mittels

$$\kappa(\mathbf{p_o}) = \frac{\partial^2 g}{\partial v^2} \left( 1 + \left( \frac{\partial g}{\partial v} \right)^2 \right)^{-\frac{3}{2}} \Bigg|_{u=0, v=0}$$

bestimmt, wobei g die skalierte Phase beschreibt und die Ableitung gebildet werden entlang der Achsen eines Koordinatensystems (u, v) mit dem Ursprung im Zentrum des Antennen-Arrays. Dabei weist die U-Koordinate in Richtung des Senders und die V-Koordinate steht senkrecht dazu. Insbesondere ist g definiert als $g = \varphi c_0/\omega_c$ mit $c_0$ der Lichtgeschwindigkeit und $\omega_c$ der Kreisfrequenz des Funksignals. Bevorzugt lässt sich dabei die Krümmung vereinfachen zu

$$\kappa_o \triangleq -\frac{c_0}{\omega_c}\frac{\partial^2 \phi}{\partial v^2}\bigg|_{P_o} = \frac{1}{d_s}.$$

Vorzugsweise ergibt sich der Abstand zum Sender aus $\kappa(p_0) = 1/d_s$. Somit lässt sich aus der Krümmung der Wellenfront des empfangenen Funksignals unmittelbar die Entfernung zwischen Empfänger und Sender ermitteln.

Vorzugsweise wird die zweite Ableitung der skalierten Phase approximiert mittels

$$g''_{lmn} = \frac{2(g'_{mn} - g'_{lm})}{v_l - 2v_m + v_n},$$

wobei $g'_{lm}$ ermittelt wird zu

$$g'_{lm} = \frac{g_m^{(V)} - g_l^{(V)}}{v_m - v_l}.$$

Dabei bedeutet g' die erste Ableitung der skalierten Phase und g'' die zweite Ableitung der skalierten Phase mit $v_l = d_l \sin(\theta_l - \theta_s)$, wobei l, m, n = 1,...,L als 3 Antennen des Antenne-Arrays, $\theta_l$ in dem Winkel vom Zentrum $p_0$ des Antennen-Arrays zur jeweiligen Antenne l des Antennen-Arrays bezeichnet und $\theta_s$ dem Winkel zwischen dem Zentrum $p_0$ des Antennen-Arrays und dem Ort des Sender $p_s$ bezeichnet. Weiterhin bezeichnet $g_l^{(V)}$ die skalierte Phase im (u,v)-Koordinatensystem, welche sich bestimmen lässt zu

$$g_l^{(V)} = \phi_l c_0/\omega_c + d_l \cos(\theta_l - \theta_s),$$

mit $d_l$ dem Abstand der Antenne l des Antennen-Arrays vom Zentrum $p_0$ des Antennen-Arrays. Somit besteht ein analytischer Ausdruck bzw. Verfahren zur Berechnung der Krümmung $\kappa$ der Wellenfront und somit auch der Position des Senders. Insbesondere ist es nicht erforderlich ein iteratives Verfahren zu implementieren, wodurch der Berechnungsaufwand deutlich reduziert werden kann. Aufgrund des analytischen Ausdrucks ist es möglich die Berechnung in der Hardware des Empfängers zu implementieren, wodurch eine sehr schnelle Berechnung der Position des Senders ermöglicht wird.

Vorzugsweise wird die Position $p_s$ des Senders ermittelt durch einen Maximum-Likelihood-Algorithmus, wobei das Maximum der Gleichung

$$\hat{p}_{s,\text{ML}} = \arg\max_{p_s} \|r^H s\|^2$$

als Position $\hat{p}_s$ des Senders angenommen wird. Dabei ist $r = [r_1,..., r_L]^T$ mit $r_l$ dem durch die Antenne l des Antennen-Arrays empfangenen Signal im Basisband entspricht. Dabei ist l=1,...,L mit L der Anzahl der Antennen im Antennen-Array. $r_l$ entspricht somit dem physikalisch empfangenen Signal an der Antenne l des Antennen-Arrays. $r_l$ lässt sich ausdrücken zu

$$r_l(t) = \alpha_s e^{j\phi_\delta} e^{-j\omega_c d_{sl}/c_0} + n_l(t)$$

.

Dabei ist $\alpha_s$ der Signalabschwächung entlang der Sichtlinie vom Sender zum Empfänger, $\varphi_\delta$ die Phase des ausgesendeten Signals, $\omega_c = 2\pi f_c$ und $n_l(t)$ ein an den Antennen auftretender Rauschterm. Der Abstand $d_{ls}$ der Antennen l zum Sender kann dabei ausgedrückt werden mittels

$$d_{sl} = \sqrt{d_s^2 + d_l^2 - 2 d_s d_l \cos(\theta_l - \theta_s)}$$

$d_l$ entspricht dem Abstand der Antenne l vom Zentrum $p_0$ des Antennen-Arrays.

Vorzugsweise erfolgt eine analytische Erfassung der Position des Senders wie vorstehend oder nachfolgend beschrieben, und sodann wird eine genaue Bestimmung der Position des Senders durchgeführt mittels dem vorstehend Beschriebenen Maximum-Likelihood-Algorithmus. Somit erfolgt die Bestimmung der Position des Senders kombiniert durch das analytische Verfahren und den Maximum-Likelihood-Algorithmus.

Vorzugsweise wird die Richtung $\theta_s$ zum Sender ermittelt gemäß

$$\theta_s = \arctan 2 \left( -\frac{\partial \phi}{\partial y}, -\frac{\partial \phi}{\partial x} \right) \Bigg|_{x=x_0, y=y_0}$$

mit $\varphi$ als Phase des empfangenen Signals, wobei insbesondere über alle Antennen l des Antennen-Arrays gemittelt wird.

Vorzugsweise wird bei der Bestimmung der Richtung $\theta_s$ zum Sender die Ableitung nach der Phase mittels

$$\phi'_{lm} = \begin{pmatrix} \frac{\phi_m - \phi_l}{x_m - x_l} \\ \frac{\phi_m - \phi_l}{y_m - y_l} \end{pmatrix}$$

bestimmt wird, wobei mit $x_m$, $y_m$ die x-Koordinate bzw. y-Koordinate der jeweiligen Antenne bezeichnet und $\varphi_l$ und $\varphi_m$ die Phase an der l-ten und m-ten Antenne bezeichnet. Dabei wird insbesondere gemäß dem Zusammenhang

$$\frac{\partial \phi}{\partial \mathbf{p}^{(xy)}} \Bigg|_{\mathbf{p}^{(xy)} = \mathbf{p}_0^{(xy)}} = \sum_{\forall lm} \phi'_{lm}.$$

.

über alle Antennen des Antennen-Arrays gemittelt.

Vorzugsweise ist die Genauigkeit der Winkelbestimmung beschränkt durch

$$\mathrm{CRB}[\theta_s] \approx \frac{2\sigma^2 d_s^2}{S^2 L \tilde{A}^2 M_2},$$

unter der Annahme, dass die Anzahl L der vorhandenen Antennen im Antennen-Array sehr groß ist und der Abstand $d_s$ zwischen Sender und Empfänger deutliche größer ist als die Abmessung A des Antennen-Arrays. Dabei ist S die Amplitude des übertragenen Signals und es gilt $\alpha_s = S c_0 / 2\omega_c d_s$, mit $\alpha_s$ der Signalabschwächung entlang der Sichtlinie vom Sender zum Empfänger, wobei $\sigma^2$ die Rauschvarianz angibt. Der Term $2\sigma^2 d_s^2/S$ beschreibt somit den Effekt des Signal-zu-Rausch-Verhältnis SNR. $\tilde{A} = A\sin\theta_s$ bezeichnet die effektive Öffnungsweite des Antennen-Arrays. $M_k$ beschreibt die normalisierte Antennenverteilung der Antennen innerhalb dem Antennen-Array und ist definiert als

$$M_k = \sum_{l=1}^{L}(d_l/A)^k/L.$$

Somit hängt die Genauigkeit der Winkelbestimmung linear von der Anzahl der Antennen ab sowie von der räumlichen Verteilung der Antennen im Antennen-Array gegeben durch $M_2$.

Vorzugsweise ist die Genauigkeit der Abstandsbestimmung bzw. der Bestimmung von $d_s$ beschränkt durch

$$\mathrm{CRB}[d_s] \approx \frac{2\sigma^2 d_s^2}{S^2}\frac{4d_s^4}{L\tilde{A}^4(M_4 - M_2^2)}.$$

mit den vorstehenden Definitionen. Somit hängt die Genauigkeit der Abstandbestimmung linear von der Anzahl der Antennen ab sowie von der räumlichen Verteilung der Antennen im Antennen-Array gegeben durch $M_4 - M_2^2$.

Vorzugsweise werden zur Bestimmung der Position des Senders zunächst die Antennen des Antennen-Arrays in Untermengen $T_i$ unterteilt, wobei jedes $T_i$ mindestens drei benachbarte Antennen enthält mit dem Mittelpunkt $P_i$. Dann kann für jede dieser Untermengen $T_i$ ein lokaler Schätzwert $\hat{\theta}_{si}$ des Winkels zum Sender ermittelt werden unter der Annahme einer konstanten Krümmung der Wellenfront an den Antennen von $T_i$ für jedes geeignete Paar l,m in $T_i$. Sodann wird für alle Kombinationen l,m,n der Antennen aus $T_i$ ein erster Schätzwert $\tilde{\kappa}_{lmn}$ der Krümmung berechnet unter der Annahme einer konstanten Krümmung der Wellenfront an allen Antennen von $T_i$. Aus diesen Schätzwerten $\tilde{\kappa}_{lmn}$ wird sodann ein lokaler Schätzwert $\hat{\kappa}_i$ für jedes $T_i$ berechnet als Schätzung der Krümmung. Aus den lokalen Schätzwerten der Krümmung $\hat{\kappa}_i$ wird sodann die Position des Senders bestimmt.

Vorzugsweise erfolgt die Bestimmung der lokalen Schätzwerte $\hat{\theta}_{si}$ der lokalen Winkel zum Sender mittels

$$\phi_{lm} \approx -\mathbf{e}_{si}^T\mathbf{p}_{lm}\omega_c/c_0, \quad \forall d_{lm}\omega_c/c_0 < \pi/2.$$

mit

$$\mathbf{p}_{lm} = \mathbf{p}_l^{(xy)} - \mathbf{p}_m^{(xy)}, \quad \phi_{lm} = \phi_l - \phi_m \text{ and } \mathbf{e}_{si} = \left[\cos\theta_{si}, \sin\theta_{si}\right]^T.$$

Vorzugsweise wird zur Bestimmung des lokalen Schätzwerts $\hat{\kappa}_i$ zunächst für jede dieser Untermengen $T_i$ eine lokale Koordinatentransformation $C^{(x,y)} \rightarrow C^{(u_i,v_i)}$ für das jeweilige $T_i$ unter Kenntnis des Mittelpunkt $P_i$ und dem Schätzwert des Winkels $\hat{\theta}_{si}$ durchgeführt werden, so dass das neue lokale Koordinatensystem $C^{(u_i,v_i)}$ in $P_i$ seinen Ursprung hat und die Achse $u_i$ mit der Richtung $\hat{\theta}_{si}$ übereinstimmt. Die bei der Berechnung der Schätzung $\hat{\kappa}_{lmn}$ auftretende zweite Ableitung der Phase für die Untermenge $T_i$ kann dabei approximiert werden mittels drei nebeneinander liegenden Elementen l,m,n von $T_i$ zu

$$\tilde{\kappa}_{lmn} = 2\frac{\triangle_{lm} - \triangle_{mn}}{v_{lm} + v_{mn}},$$

wobei

$$\left[ \begin{array}{c} u_{gh} \\ v_{gh} \end{array} \right] = \left[ \begin{array}{c} \hat{\mathbf{e}}_{si}^T \\ \hat{\mathbf{e}}_{si,\perp}^T \end{array} \right] \mathbf{p}_{gh}$$

und

$$\hat{\mathbf{e}}_{si,\perp} = \left[ \begin{array}{c} \sin \hat{\theta}_{si} \\ -\cos \hat{\theta}_{si} \end{array} \right].$$

Nachfolgend wird die lokale Schätzung der Krümmung $\hat{\kappa}_i$ bestimmt durch Mittelung über die Schätzwerte der Krümmungen $\tilde{\kappa}_{lmn}$ aller Kombinationen l,m,n für die gilt

$$|v_{lm}|, |v_{mn}| \text{ and } |v_{lm} + v_{mn}| \gg 0.$$

Vorzugsweise erfolgt eine Anpassung des wie vorstehen beschrieben ermittelten Schätzwerts der lokalen Krümmung $\hat{\kappa}_i$ zu

$$\hat{\kappa}_i = \left\| \left( \sum_{\forall \mathcal{T}_j} \tilde{\kappa}_j \right)^{-1} \left( \sum_{\forall \mathcal{T}_j} \hat{\mathbf{e}}_{sj} + \tilde{\kappa}_j \mathbf{p}_j^{(xy)} \right) - \mathbf{p}_i^{(xy)} \right\|^{-1}$$

wobei der Zusammenhang

$$\mathbf{p}_s^{(xy)} = \kappa_i^{-1} \mathbf{e}_{si} + \mathbf{p}_i^{(xy)} = \frac{\sum_{\forall \mathcal{T}_i} \mathbf{e}_{si} + \kappa_i \mathbf{p}_i^{(xy)}}{\sum_{\forall \mathcal{T}_i} \kappa_i}.$$

genutzt wurde. Dabei ist $\mathbf{p}_j^{(xy)}$ die Position der j-ten Antenne in der xy-Ebene und $\mathbf{p}_s^{(xy)}$ die Position des Senders in der xy-Ebene. Sodann kann die Senderposition ermittelt werden durch Ersetzen der Größen $\theta_{si}$ und $\kappa_i$ durch ihre wie vorstehend beschrieben ermittelten Schätzwerte $\hat{\theta}_{si}$ und $\hat{\kappa}_i$. Somit besteht ein analytischer Ausdruck bzw. Verfahren zur Berechnung der Krümmung $\kappa$ der Wellenfront und somit auch der Position des Senders. Insbesondere ist es nicht erforderlich ein iteratives Verfahren zu implementieren, wodurch der Berechnungsaufwand deutlich reduziert werden kann. Aufgrund des analytischen Ausdrucks ist es möglich die Berechnung in der Hardware des Empfängers zu implementieren, wodurch eine sehr schnelle Berechnung der Position des Senders ermöglicht wird.

Vorzugsweise erfolgt die Berechnung der Position des Senders iterationsfrei. Insbesondere wird ein analytischer Ausdruck verwendet zur Bestimmung der Position des Senders. Hierdurch ist ein besonderes einfaches Verfahren geschaffen.

Vorzugsweise ist der Abstand zwischen Sender und Empfänger in der selben Größenordnung wie die Fraunhofer-Distanz $2A^2/\lambda$ mit A der Abmessung des Antennen-Arrays und $\lambda$ der Wellenlänge des Funksignals. Bevorzugt ist der Abstand zwischen Sender und Empfänger kleiner oder gleich der Fraunhofer-Distanz. Dabei ist die Abmessung A des Antennen-Arrays üblicherweise kleiner als 2 Meter, insbesondere kleiner als 1 Meter und besonders bevorzugt kleiner als 10 Zentimeter.

Vorzugweise beträgt der Abstand zwischen Empfänger und Senders weniger als 500 Meter bevorzugt weniger als 200 und besonders bevorzugt weniger als 100 Meter.

Vorzugsweise ist nur ein einzelner Empfänger erforderlich zur Positionsbestimmung.

Vorzugsweise handelt es sich bei dem Funksignal um ein WLAN-, 4G-, 5G-Funksignal oder einem Funksignal einer weiteren Generation oder dergleichen. Alternativ oder zusätzlich hierzu handelt es sich bei dem Funksignal um ein Breitband- / Multi-Carrier System.

Vorzugsweise ist das Antennen-Array ausgebildet als virtuelles Antennen-Array und weist somit eine Vielzahl von Antennen auf, die nicht unmittelbar miteinander verbunden sind, jedoch eine definierte bzw. bekannte Position zueinander aufweisen. Die Signale der einzelnen Antennen, welche zu einem virtuellen Antennen-Array zusammengenommen werden, können dann wie vorstehend beschrieben verarbeitet werden, um die unbekannte Position des Senders zu ermitteln. Insbesondere ist es möglich durch die Antennen des virtuellen Antenne-Arrays kohärente bzw. synchronisierte Phasenmessungen durchzuführen.

Weiterhin betrifft die vorliegende Erfindung einen Empfänger zum Empfangen eines Funksignals ausgebildet zur Bestimmung der Position $p_s$ eines Senders des Funksignals. Dabei weist der Empfänger ein Antennen-Array auf, wobei das Antennen-Array eine Vielzahl L von Antennen I aufweist mit I=1,...,L. Dabei ist durch jede Antenne I des Antennen-Arrays das Funksignal insbesondere zu einem gemeinsamen vorgegebenen Zeitpunkt empfangbar. Mit dem Antennen-Array ist eine Auswertevorrichtung verbunden, wobei die Auswertevorrichtung ausgebildet ist die Krümmung $\kappa$ einer Wellenfront des Funksignals zu ermitteln und hieraus die Position $p_s$ des Senders zu bestimmen.

Vorzugsweise ist der Empfänger ausgebildet entsprechend den Merkmalen des vorstehend beschriebenen Verfahrens.

Vorzugsweise handelt es sich bei dem Empfänger um eine Basisstation eines Drahtloskommunikationsnetzwerks wie beispielsweise einem eNB ("evolved node B") eines 4G Kommunikationsnetzwerks oder gNB ("next generation node B") eines 5G Telekommunikationsnetzwerks oder einer weiteren Generation. Alternativ hierzu handelt es sich bei dem Empfänger um ein Terminal wie beispielsweise einem Handy, Smartphone, Tablet, Laptop oder dergleichen.

Vorzugsweise sind die Antennen innerhalb dem Antennen-Array angeordnet in einer Doppel-T-Form. Diese Doppel-T-Form weist eine erste Linie auf entlang der mindestens zwei Antennen angeordnet sind. An den jeweiligen, gegenüberliegenden Enden der ersten Linie sind mittig eine zweite Linie und eine dritte Linie bevorzugt senkrecht zur ersten Linie angeordnet, wobei entlang der zweiten Linie und der dritten Linie jeweils mindestens zwei Antennen angeordnet sind. Wie vorstehend dargelegt hängt die Genauigkeit, mit der der Abstand zum Sender bzw. der Winkel zum Sender bestimmt werden kann, ab von der normalisierte Antennenverteilung $M_k$ der Antennen innerhalb des Antennen-Arrays und hier insbesondere von den Werten $M_2$ und $M_4$. Diese Werte werden durch die Doppel-T-Form gerade maximiert, so dass die untere Schranke der Genauigkeit zur Bestimmung von Abstand und/oder Winkel zum Sender sinkt. Somit ist es durch die Doppel-T-Form möglich Abstand und/oder Winkel zum Sender mit einer höheren Genauigkeit zu bestimmen.

Vorzugsweise weist die Anordnung der Antennen im Antennen-Array zur Bestimmung des Winkels zum Sender weitere Antennen neben den T-Enden auf. Weitere Antennen sind dabei zwischen den T-Enden bzw. der zweiten und dritten Linie angeordnet. Besonders bevorzugt sind dabei die zusätzlichen Antennen neben den Enden der ersten Linie angeordnet. Somit sind an der Verbindungstelle zwischen den T-Enden bzw. der zweiten Linie und der dritten Linie mit der ersten Linie eine größere Anzahl an Antennen angeordnet, so dass in diesem Bereich die Antennendichte vergrößert ist und damit die Auflösung der vorhandenen Stützpunkte bei der Erfassung der Phase des vom Sender ausgesendeten Signals verbessert wird. Hierdurch wird insbesondere der Faktor $M_2$ maximiert, so dass eine höhere Genauigkeit bei de Bestimmung des Winkels zum Sender ermöglicht wird.

Vorzugsweise weist die Anordnung der Antennen im Antennen-Array zur Bestimmung des Abstands zum Sender weitere Antennen auf, welche mittig zwischen den T-Enden bzw. der zweiten Linie und der dritten Linie angeordnet sind. Dabei können die zusätzlichen Antennen symmetrisch entlang einer oder mehrere Linien, welche die erste Linie bevorzugt senkrecht schneiden, angeordnet sein. Somit ist im Zentrum des Antennen-Arrays eine größere Anzahl an Antennen angeordnet, so dass in diesem Bereich die Antennendichte vergrößert ist und damit die Auflösung der vorhandenen Stützpunkte bei der Erfassung der Phase des vom Sender ausgesendeten Signals verbessert wird. Hierdurch wird insbesondere der Faktor $M_4-M_2^2$ maximiert, so dass eine höhere Genauigkeit bei der Bestimmung des Abstands zum Sender ermöglicht wird.

Weiterhin betrifft die Erfindung ein Kommunikationssystem mit einem Sender zum Aussenden eines Funksignals und einem Empfänger zum Empfangen des Funksignals. Dabei ist der Empfänger ausgebildet wie vorstehend beschrieben. So kann es sich bei dem Sender um ein Handy handeln, so dass durch die Basisstation eine Ortsbestimmung des Handys erfolgen kann. Alternativ hierzu kann es bei dem Sender um die Basisstation handeln, so dass durch das Handy als Empfänger eine Ortsbestimmung der Basisstation erfolgen kann.

Vorzugsweise handelt es sich bei dem Kommunikationssystem um ein Drahtloskommunikationsnetzwerk, insbesondere der 4. Generation, der 5. Generation oder höher, oder um ein gesondertes Drahtloskommunikationsnetzwerk beispielsweise für Feuerwehr, Schiffsrettung, Rettungs- und Notfallkräfte. Hierdurch ist die Ortung beispielsweise einer in Not geratenen Person möglich, so dass eine lange Suche nach der Person vermieden werden kann und entsprechende Hilfe schneller erfolgen kann.

Nachfolgend wie die Erfindung anhand einer bevorzugten Ausführungsform unter Bezugnahme auf die beigefügten Zeichnungen näher erläutert.

Es zeigen:

Figur 1 — eine schematische Anordnung von Sender und Empfänger gemäß der vorliegenden Erfindung,

Figur 2 — ein Vergleich der Berechnungsverfahren der Positionsbestimmung für den Abstand

Figur 3 — ein Vergleich der Berechnungsmethoden für die Beispiele der Figur 2 bezüglich dem Positionswinkel und

Figure 4a und 4b — Darstellungen der Anordnung der Antennen in einem Antennen-Array gemäß der vorliegenden Erfindung.

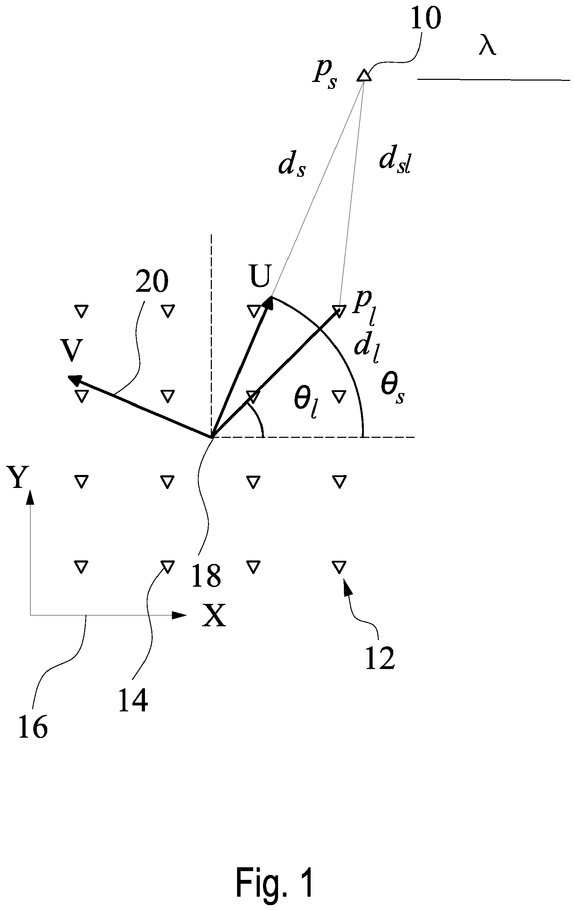

Figur 1 zeigt einen schematischen Aufbau mit einem Sender 10 an der Position $p_s$ und einen Empfänger, wobei der Empfänger ein Antennen-Array 12 aufweist mit einer Vielzahl von Antennen 14 an den Positionen $p_l$ mit l=1,...,L, wobei L der Anzahl der Antennen 14 des Antennen-Arrays 12 entspricht. Durch die einzelnen Antennen 14 des Antennen-Arrays 12 wird das durch den Sender 10 ausgesendete Funksignal empfangen. Der Abstand zwischen Sender und Empfänger ist dabei derart, dass eine Krümmung der Wellenfront des ausgesendeten Funksignals erfassbar ist. Hierbei wird durch jede Antenne 14 die Phase $\varphi_l$ ermittelt. In Figur 1 ist ein erstes Koordinatensystem 16 $C^{(xy)}$ eingetragen, dessen Ursprung im Zentrum $p_0$ 18 des Antennen-Arrays 12 geordnet ist. Gesucht ist nun der Winkel $\theta_s$ sowie der Abstand $d_s$ zum Ort des Senders $p_s$.

Die Richtung $\theta_s$ wird bestimmt durch

$$\theta_s = \arctan 2\left(-\frac{\partial\phi}{\partial y}, -\frac{\partial\phi}{\partial x}\right)\Bigg|_{x=x_0, y=y_0},$$

wobei die Ableitungen entlang der x- und y-Richtung des ersten Koordinatensystems 16 $C^{(xy)}$ erfolgt. Die darin enthaltenen Ableitungen der Phase $\varphi_l$ können approximiert werden durch

$$\phi'_{lm} = \begin{pmatrix} \frac{\phi_m - \phi_l}{x_m - x_l} \\ \frac{\phi_m - \phi_l}{y_m - y_l} \end{pmatrix},$$

wobei $x_l$ und $y_l$ die Position der l-ten Antenne 14 des Antennen-Arrays 12 im ersten Koordinatensystem 16 $C^{(xy)}$ beschreibt. Hierbei erfolgt gemäß

$$\frac{\partial\phi}{\partial \mathbf{p}^{(xy)}}\Bigg|_{\mathbf{P}^{(xy)}=\mathbf{P}_0^{(xy)}} = \sum_{\forall lm} \phi'_{lm}$$

ein Mittelung über alle empfangenen Phasen $\varphi_l$. Somit ist der Winkel $\theta_s$ in Richtung des Senders 10 bekannt. Insbesondere ist der Winkel $\theta_s$ analytisch und iterationsfrei bestimmbar.

Nachfolgend wird die Krümmung der Wellenfront ermittelt mittels

$$\kappa(\mathbf{p}_0) = \frac{\partial^2 g}{\partial v^2}\left(1 + \left(\frac{\partial g}{\partial v}\right)^2\right)^{-\frac{3}{2}}\Bigg|_{u=0, v=0} = \frac{1}{d_s},$$

wobei sich der Abstand $d_s$ vom Zentrum $p_0$ 18 des Antennen-Arrays 12 ergibt zu $d_s=1/\kappa(p_0)$. Dabei entspricht $g=\varphi c_0/\omega_c$ der skalierten Phase entlang der v-Achse des zweiten Koordinatensystems 20 $C^{(uv)}$, welches gegenüber dem ersten Koordinatensystem 16 $C^{(xy)}$ gerade um den Winkel $\theta_s$ gedreht ist, so dass die u-Richtung ausgehend vom Zentrum 18 des Antennen-Arrays 12 in Richtung des Senders 10 weist. Die Ableitung zur Berechnung der Krümmung $\kappa$ erfolgt entlang der v-Achse. Die Ableitungen der skalierte Phase können dabei approximiert werden durch

$$g''_{lmn} = \frac{2(g'_{mn} - g'_{lm})}{v_l - 2v_m + v_n}$$

mit

$$g'_{lm} = \frac{g_m^{(V)} - g_l^{(V)}}{v_m - v_l}$$

für die jeweiligen Antennen I, m und n. Dabei ist $v_l = d_l \sin(\theta_l - \theta_s)$, wobei $\theta_l$ gerade dem Winkel von der x-Achse zur Antenne I entspricht und $d_l$ dem Abstand vom Zentrum 18 des Antennen-Arrays 12 zur Antenne I. Weiterhin ist

$$g_l^{(V)} = \phi_l c_0/\omega_c + d_l \cos(\theta_l - \theta_s) \, ,$$

die skalierte Phase im zweiten Koordinatensystem 20. Hierbei wird die beobachtete Phase $\varphi_l$ auf die v-Achse abgebildet. Hierdurch ist auf einfache Weise analytisch und iterationsfrei ebenso der Abstand $d_s$ zwischen dem Antennen-Array 12 und dem Sender 10, insbesondere dessen Zentrum 18 ermittelbar. Es handelt sich um ein einfaches Verfahren, welches schnell durchgeführt werden kann und nur einen geringen Rechenaufwand mit sich bringt. Anschaulich befindet sich der Sender im Zentrum der Kugelwelle, über deren Krümmung auch der Radius und somit der Abstand zwischen Sender und Empfänger ermittelt werden kann. Hierbei befindet sich der Empfänger in einem Abstand zum Sender, so dass die Krümmung der Wellenfront des ausgesendeten Funksignals erfassbar ist mit dem Antennen-Array. Bei den in der Drahtlostelekommunikation üblichen Wellenlängen von einigen Millimetern ergibt sich hierbei in Abhängigkeit von der verwendeten Wellenlänge und der Abmessung des Antennen-Arrays ein maximaler Abstand von einigen Metern bis hin zu mehreren hundert Metern zwischen dem Sender und dem Empfänger entlang der Sichtlinie (line of sight). Die Erfindung ist jedoch nicht auf die Verwendung einer bestimmten Wellenlänge beschränkt, solange sich der Empfänger im Nahfeld des Senders befindet. Allgemein wird bevorzugt, dass der Abstand zwischen Sender und Empfänger in der gleichen Größenordnung ist wie die Fraunhofer-Distanz, die definiert ist zu $2A^2/\lambda$, mit A als der Abmessung des Antennen-Arrays. Bevorzugt ist der Abstand zwischen Sender und Empfänger kleiner oder gleich der Fraunhofer-Distanz.

Alternativ hierzu ist es möglich die Position $p_s$ des Senders 10 mittels eines Maximum-Likelihood-Algorithmus zu bestimmen. Dabei ergibt sich die angenommene Position $\hat{p}_s$ des Senders zu

$$\hat{p}_{s,\mathrm{ML}} = \arg \max_{\mathbf{p}_s} \|\mathbf{r}^H \mathbf{s}\|^2 \, ,$$

wobei $\mathbf{r}=[r_1,..., r_L]^T$ der durch die einzelnen Antennen 14 gemessenen Signale im Basisband. Weiterhin ist $\mathbf{s}=[s_1,...,s_L]^T$ das verzögerte Funksignal. Das empfangene Signal im Basisband ergibt sich zu

$$r_l(t) = \underbrace{\eta_s A \, e^{j\phi_s}}_{\alpha_s} \underbrace{e^{-j\omega_c \tau_{sl}}}_{\triangleq s_l} + n_l(t)$$

wobei $\eta_s$ ein Abschwächungsfaktor der Amplitude A des ausgesendeten Signals ist. $\exp(j\varphi_\delta)$ der Phase des Signals entspricht und $n_l(t)$ einen Rauschterm beschreibt. Weiterhin ist $T_{sl}$ die Verzögerung des Funksignals $s_l=\exp(-j\omega_c T_{sl})$. Dies kann umgeformt werden zu

$$r_l(t) = \alpha_s e^{j\phi_\delta} e^{-j\omega_c d_{sl}/c_0} + n_l(t),$$

wobei $\alpha_s$ der Signalabschwächung entlang der Sichtlinie vom Sender zum Empfänger entspricht.

Dabei ergibt sich die Verzögerung zu

$$\tau_{sl} = \underbrace{\sqrt{d_s^2 + d_l^2 - 2d_s d_l \cos(\theta_l - \theta_s)}}_{=d_{sl}} / c_0$$

,

wobei $d_{sl}$ gerade dem Abstand zwischen der Antenne I 14 des Antennen-Arrays 12 und dem Ort $p_s$ des Senders 10 entspricht, so dass $T_{sl}$ eine Funktion des Ortes $p_s = [d_s, \theta_s]^T$ ist. $d_l$ beschreibt den Abstand der Antenne I zum Zentrum des Antennen-Arrays. Durch den Maximum-Likelihood-Algorithmus wird nun der Ort gesucht, an dem die zu erwartende Verzögerung $s_l$ gerade der gemessenen Verzögerung des Funksignals entspricht. Der Ort mit der höchsten Wahrscheinlichkeit wird sodann als Ort $\hat{p}_s$ des Senders 10 angenommen.

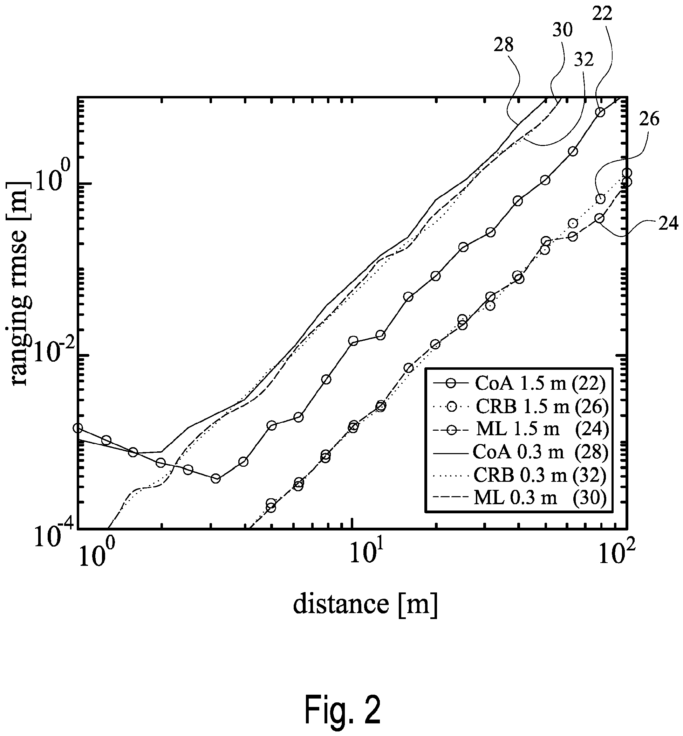

Figur 2 zeigt die Berechnungssimulation des Abstands $d_s$ zwischen Sender 10 und Empfänger und trägt dabei die Ungenauigkeit als Wurzel der mittleren Fehlerquadratsummen (Root-Mean-Square Deviation - RSME) der Abstandsbestimmung über den Abstand zwischen Sender 10 und Empfänger ab. In einem ersten Beispiel beträgt die Breite D des Antennen-Arrays 1,5 Meter. Kurve 22 zeigt, dass analytische Berechnungsergebnis an, wohingegen Kurve 24 die Simulation mittels Maximum-Likelihood-Algorithmus darstellt. Weiterhin ist Kurve 26 das theoretische Minimum der Ungenauigkeit gemäß dem Cramer-Rao-Schranke (CRB), welche sich ergibt zu

$$\text{CRB}[\mathbf{p}_s] = \frac{\sigma^2}{2\omega_c^2 \alpha_s^2} \qquad ($$

$$\times \left( \left( \sum_{l=1}^{L} \frac{\partial \tau_{sl}}{\partial \mathbf{p}_s} \frac{\partial \tau_{sl}}{\partial \mathbf{p}_s^T} \right) - \frac{1}{L} \left( \sum_{l=1}^{L} \frac{\partial \tau_{sl}}{\partial \mathbf{p}_s} \right) \left( \sum_{l=1}^{L} \frac{\partial \tau_{sl}}{\partial \mathbf{p}_s^T} \right) \right)^{-1}$$

mit $\alpha_s$ der abgeschwächten Amplitude am Ort des Empfängers und $\sigma^2$ der Signalvarianz. Die Frequenz $f_c$ des Funksignals wird angenommen zu 1 GHz.

In einem zweiten Beispiel ebenfalls gezeigt in der Figur 2 wird die Ungenauigkeit als Wurzel der mittleren Fehlerquadratsummen (Root-Mean-Square Deviation - RSME) der Abstandsbestimmung für ein Antennen-Array 12 mit der Abmessung D = 0,3 Meter dargestellt, wobei wiederum die analytische Methode in Kurve 28 die Berechnungsmethode mittels Maximum-Likelihood-Algorithmus in Kurve 30 und das theoretische Limit (CRB) in Kurve 32 dargestellt ist. Als Frequenz wird hierbei wiederum 1 GHz angenommen.

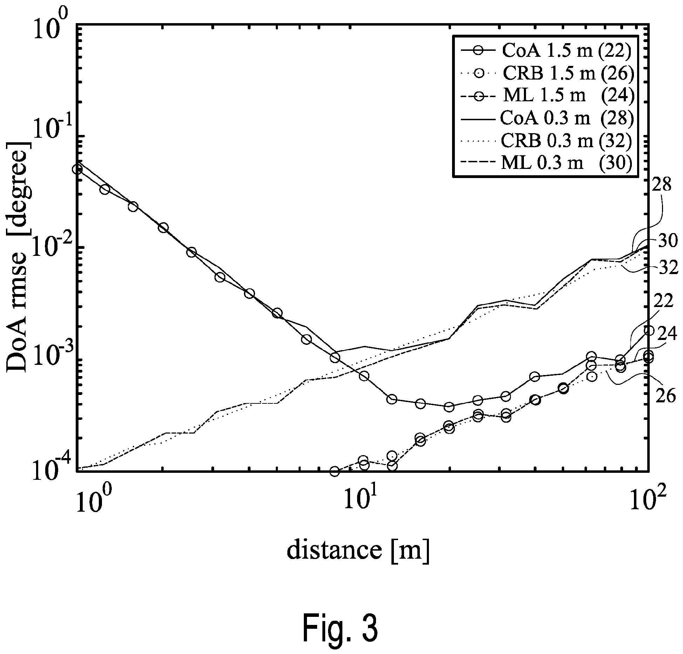

Figur 3 zeigt für die in den Figur 2 dargestellten Beispiel die Ungenauigkeit bei der Berechnung des Winkels für die einzelnen Berechnungsmethoden der vorliegenden Erfindung.

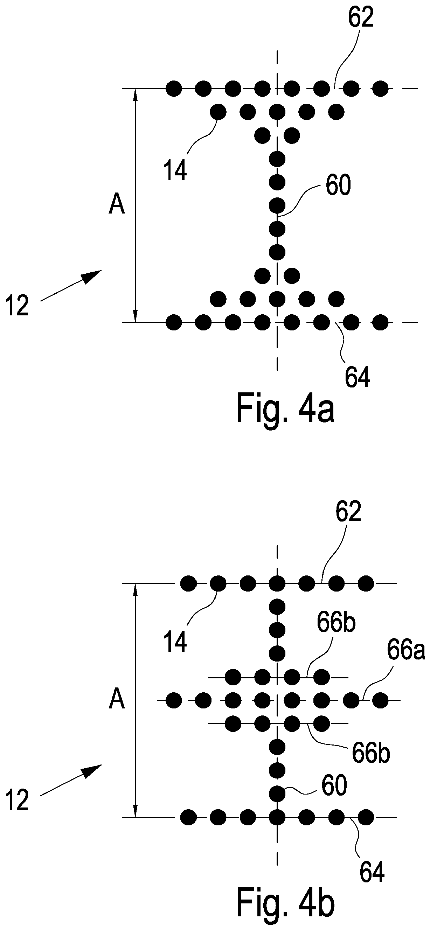

In Figur 4a ist ein Antennen-Array 12 dargestellt, welches optimiert wurde für die Erfassung des Winkels $\theta_s$ zum Sender. Die Antennen 14 sind dabei in dem Antennen-Array 12 angeordnet in einer Doppel-T-Form. Dabei weist das Antennen-Array eine erste Linie 60 auf, entlang derer eine Mehrzahl an Antennen 14 angeordnet sind. An den jeweiligen Enden der ersten Linie 60 sind quer eine zweite Linie 62 und eine dritte Linie 64 angeordnet entlang derer wiederum eine Mehrzahl an Antennen 14 angeordnet sind. Weitere Antennen 14 sind im Bereich des Kreuzungspunktes zwischen der ersten Linie 60 und der zweiten Linie 62 bzw. der ersten Linie 60 und der dritten Linie 64 vorgesehen. Die Anordnung der Antennen ist dabei symmetrisch sowohl zu der ersten Linie 60 als auch zu einer Mittellinie (nicht dargestellt). Durch die so gewählte Anordnung der Antennen 14 im Antennen-Array 12 wird der Faktor $M_2$ maximiert, wodurch die erzielbare Genauigkeit bei der Bestimmung des Winkels $\theta_s$ zum Sender verbessert wird.

In Figur 4b ist ein Antennen-Array 12 dargestellt, welches optimiert wurde für die Erfassung des Abstands $d_s$ zum Sender. Die Antennen 14 sind dabei in dem Antennen-Array 12 angeordnet in einer Doppel-T-Form. Dabei weist das Antennen-Array eine erste Linie 60 auf, entlang derer eine Mehrzahl an Antennen 14 angeordnet sind. An den jeweiligen Enden der ersten Linie 60 sind quer eine zweite Linie 62 und eine dritte Linie 64 angeordnet entlang derer wiederum eine Mehrzahl an Antennen 14 angeordnet sind. Weitere Antennen 14 sind mittig zwischen der zweiten Linie 62 und der dritten Linie 64 angeordnet. Dabei können diese Antennen 14 ebenfalls entlang einer oder mehrere Linien 66a, 66b angeordnet sein, welche die erste Linie 60 im Wesentlichen senkrecht schneiden. Die Anordnung der Antennen ist dabei symmetrisch sowohl zu der ersten Linie 60 als auch zu einer Mittellinie, welche der im dargestellten Beispiel der weiteren Linie 66a entspricht. Durch die so gewählte Anordnung der Antennen 14 im Antennen-Array 12 wird der Faktor $M_4$-$M_2^2$ maximiert, wodurch die erzielbare Genauigkeit bei der Bestimmung des Abstands $d_s$ zum Sender verbessert wird.

Somit ist ein Verfahren geschaffen, um die Krümmung $\kappa$ der Wellenfront eines empfangenen Funksignals zu ermitteln und hieraus die Position $p_s$ zu bestimmen. Eine zeitliche Synchronisation zwischen Sender und Empfänger ist nicht mehr erforderlich. Auch ist es nicht erforderlich, dass mehrere zeitsynchrone Empfänger gleichzeitig das Funksignal empfangen können. Selbstverständlich ist die vorliegende Erfindung nicht auf eine bestimmte Wellenlänge beschränkt, sondern für alle Wellenlängen anwendbar, solange der Empfänger die Krümmung der empfangenen Wellenfront erfassen kann. Somit ist ein Verfahren geschaffen, welches ohne Kenntnis über das transmittierte Signal eine Positionierung erlaubt. Insbesondere ist kein Pilotton erforderlich oder ein Austausch von Daten.

**Patentansprüche**

1. Verfahren zur Bestimmung der Position eines Senders mit den Schritten

    a. Aussenden eines Funksignals durch den Sender;
    b. Empfangen des Funksignals durch einen Empfänger mittels eines Antennen-Arrays mit einer Vielzahl L von Antennen l = 1,...,L;
    c. Ermitteln der Phasen $\varphi_l$ des Funksignals an den einzelnen Antennen l des Antennen-Arrays;
    d. Bestimmung der Krümmung der Wellenfront des empfangenen Funksignals aus den Phasen $\varphi_l$; und
    e. Bestimmen der Position des Senders anhand der ermittelten Krümmung.

2. Verfahren nach Anspruch 1, bei welchem die Krümmung bestimmt wird mittels

$$\kappa(\mathbf{p_o}) = \frac{\partial^2 g}{\partial v^2} \left( 1 + \left( \frac{\partial g}{\partial v} \right)^2 \right)^{-\frac{3}{2}} \Bigg|_{u=0, v=0},$$

wobei g die skalierte Phase beschreibt und die Ableitungen gebildet werden entlang der Achsen eines Polar-Koordinatensystems (u,v) mit dem Ursprung im Array-Zentrum am Ort $p_0$, wobei die u-Koordinate in Richtung des Senders zeigt und die v-Koordinate senkrecht dazu steht, wobei die Krümmung insbesondere vereinfacht werden kann zu

$$\kappa_o \triangleq -\frac{c_0}{\omega_c} \frac{\partial^2 \phi}{\partial v^2} \Bigg|_{P_o} = \frac{1}{d_s}.$$

3. Verfahren nach Anspruch 2, bei welchem sich der Abstand $d_s$ zum Sender ergibt aus $\kappa(p_0) = 1/d_s$.

4. Verfahren nach einem der Ansprüche 1 bis 3, bei welchem die Richtung $\theta_s$ zum Sender ermittelt wird gemäß

$$\theta_s = \arctan 2 \left( -\frac{\partial \phi}{\partial y}, -\frac{\partial \phi}{\partial x} \right) \Bigg|_{x=x_o, y=y_o},$$

mit $\varphi$ als Phase des empfangenen Signals, wobei insbesondere über alle Antennen des Antennen-Arrays gemittelt wird.

**5.** Verfahren nach einem der Ansprüche 1 bis 4, bei welchem bei der Berechnung der Position des Senders keine Iteration erforderlich ist und/oder bei dem die Berechnung der Position des Senders analytisch erfolgt und/oder bei welchem nur ein Empfänger verwendet wird zur Positionsbestimmung.

**6.** Verfahren nach einem der Ansprüche 1 bis 5, bei welchem der Abstand zwischen Sender und Empfänger in derselben Größenordnung wie die Fraunhofer-Distanz $2A^2/\lambda$ liegt, mit A der Abmessung des Antennen-Arrays und $\lambda$ der Wellenlänge des Funksignals und bevorzugt kleiner oder gleich der Fraunhofer-Distanz ist, wobei insbesondere der Abstand zwischen Sender und Empfänger kleiner ist als 500m, bevorzugt kleiner als 200m und besonders bevorzugt kleiner als 100m ist.

**7.** Verfahren nach einem der Ansprüche 1 bis 6, bei welchem zur Bestimmung der Position des Senders

- aus den Antennen des Antenne-Arrays eine Mehrzahl an Untermengen $T_i$ gebildet werden, welche mindestens drei Antennen enthalten und einen Mittelpunkt $P_i$ aufweisen,
- ein lokaler Schätzwert des Winkes $\hat{\theta}_{si}$ ermittelt wird unter der Annahme eines konstanten Winkels zum Sender für alle Antennen von $T_i$
- für alle Kombinationen l,m,n der Antennen aus $T_i$ ein Schätzwert $\tilde{\kappa}_{lmn}$ der Krümmung berechnet wird unter der Annahme einer konstanten Krümmung der Wellenfront an allen Antennen von $T_i$,
- aus den Schätzwerten $\tilde{\kappa}_{lmn}$ ein lokaler Schätzwert $\hat{\kappa}_i$ ermittelt wird und
- aus den lokalen Schätzwerten $\hat{\kappa}_i$ der Krümmung die Position des Senders ermittelt wird.

**8.** Verfahren nach Anspruch 7, bei welchem zur Bestimmung des lokalen Schätzwertes $\hat{\kappa}_i$ der Krümmung eine lokale Koordinatentransformation $C^{(x,y)} \rightarrow C^{(u_i,v_i)}$ für das jeweilige $T_i$ unter Kenntnis des Mittelpunkt $P_i$ und dem Schätzwerts des Winkels $\hat{\theta}_{si}$ durchgeführt wird,

- für alle Kombinationen l,m,n der Antennen aus $T_i$ ein Schätzwert $\tilde{\kappa}_{lmn}$ berechnet wird zu

$$\tilde{\kappa}_{lmn} = 2\frac{\triangle_{lm} - \triangle_{mn}}{v_{lm} + v_{mn}},$$

mit

$$\triangle_{gh} = \frac{\phi_{gh}c_0/\omega_c + u_{gh}}{v_{gh}},$$

$$\begin{bmatrix} u_{gh} \\ v_{gh} \end{bmatrix} = \begin{bmatrix} \hat{\mathbf{e}}_{si}^T \\ \hat{\mathbf{e}}_{si,\perp}^T \end{bmatrix} \mathbf{p}_{gh}$$

und

$$\hat{\mathbf{e}}_{si,\perp} = \begin{bmatrix} \sin\hat{\theta}_{si} \\ -\cos\hat{\theta}_{si} \end{bmatrix}$$

Mittelung über alle Kombinationen von l,m,n für die gilt $|v_{lm}| \gg 0$, $|V_{mn}| \gg 0$ und $|V_{lm}+V_{mn}| \gg 0$.

9. Verfahren nach Anspruch 8, bei welchem der Schätzwert der lokalen Krümmung $\hat{\kappa}_i$ angepasst wird zu

$$\hat{\kappa}_i = \left\| \left( \sum_{\forall \mathcal{T}_j} \tilde{\kappa}_j \right)^{-1} \left( \sum_{\forall \mathcal{T}_j} \hat{\mathbf{e}}_{sj} + \tilde{\kappa}_j \mathbf{p}_j^{(xy)} \right) - \mathbf{p}_i^{(xy)} \right\|^{-1}$$

wobei sich die Position des Senders ergibt durch Einsetzen der Schätzwerte $\hat{\theta}_{si}$ und $\hat{\kappa}_i$ in

$$\mathbf{p}_s^{(xy)} = \kappa_i^{-1} \mathbf{e}_{si} + \mathbf{p}_i^{(xy)} = \frac{\sum_{\forall \mathcal{T}_i} \mathbf{e}_{si} + \kappa_i \mathbf{p}_i^{(xy)}}{\sum_{\forall \mathcal{T}_i} \kappa_i} .$$

10. Empfänger zum Empfangen eines Funksignals und zur Bestimmung der Position eines Senders des Funksignals, mit einem Antennen-Array, wobei das Antennen-Array eine Vielzahl von Antennen aufweist, wobei durch jede Antenne des Antennen-Arrays das Funksignal insbesondere zu einem gemeinsamen vorgegebenen Zeitpunkt empfangbar ist und
einer mit dem Antennen-Array verbundenen Auswertevorrichtung, wobei die Auswertevorrichtung die Krümmung einer Wellenfront des Funksignals ermittelt und hieraus die Position des Senders bestimmt.

11. Empfänger nach Anspruch 10, **dadurch gekennzeichnet, dass** die Auswertevorrichtung ausgebildet ist zur Durchführung des Verfahrens nach einem der Ansprüche 1 bis 9.

12. Empfänger nach Anspruch 10 oder 11, **dadurch gekennzeichnet, dass** die Anordnung der Antennen im Antenne-Array eine Doppel-T-Form aufweist.

13. Empfänger nach Anspruch 12, **dadurch gekennzeichnet, dass** die Antennen im Antennen-Array zur Bestimmung eines Winkels in einer Doppel-T-Form angeordnet sind, wobei weitere Antennen neben den T-Enden und besonders bevorzugt neben den T-Enden und neben der Verbindungslinie der T-Enden angeordnet sind.

14. Empfänger nach Anspruch 12 oder 13, **dadurch gekennzeichnet, dass** die Antennen im Antennen-Array zur Bestimmung eines Winkels in einer Doppel-T-Form angeordnet sind, wobei weitere im Wesentlichen mittig zwischen den T-Enden entlang einer Linie angeordnete weitere Antennen vorgesehen sind.

15. Kommunikationssystem mit einem Sender zum Aussenden eines Funksignals und einem Empfänger zum Empfangen des Funksignals nach einem der Ansprüche 10 bis 14.

Fig. 1

Fig. 2

Fig. 3

Fig. 4a

Fig. 4b